# EUROPÄISCHE PATENTSCHRIFT

(11) **EP 0 394 192 B1**
(45) Veröffentlichungstag und Bekanntmachung des Hinweises auf die Patenterteilung: **29.05.1996**
(21) Anmeldenummer: 90810281.7
(22) Anmeldetag: 09.04.1990
(51) Int. Cl.: C08G 59/24, C08G 59/38, C08G 59/42

(54) **Härtbares Gemisch auf Basis von cycloaliphatischen Epoxidharzen**
Curable mixture based on cycloaliphatic epoxy resins
Mélange durcissable à base de résines époxydes cycloaliphatiques

(30) Priorität: 17.04.1989 CH 1441/89
(43) Veröffentlichungstag der Anmeldung: 24.10.1990
(73) Patentinhaber: CIBA-GEIGY AG, CH-4002 Basel (CH)
(72) Erfinder: Maurer, Jürg, Dr., CH-4125 Riehen (CH); Peyer, Robert Peter, Dr., CH-3012 Bern (CH)

(56) Entgegenhaltungen:
- EP-A- 0 262 414
- EP-A- 0 349 192
- GB-A- 2 208 231
- US-A- 3 425 961
- US-A- 3 828 000

## Beschreibung

Die vorliegende Erfindung betrifft ein härtbares Gemisch aus hydriertem Bisphenol A- oder hydriertem Bisphenol F-diglycidylether, bestimmten cycloaliphatischen Epoxidharzen und cycloaliphatischen Polycarbonsäureanhydriden, die Verwendung des härtbaren Gemisches für den Oberflächenschutz und insbesondere als Giess- und Imprägnierharz, sowie die aus dem erfindungsgemässen Gemisch durch Härtung erhaltenen Formstoffe oder Beschichtungen.

Diglycidylether von hydriertem Bisphenol A und hydriertem Bisphenol F sind beispielsweise aus dem CH-Patent 476 787 bekannt und werden zusammen mit Härtungsmitteln zur Herstellung von lichtbogen- und kriechstrombeständigen Formkörpern oder Ueberzügen aus Kunstharzmassen eingesetzt. Die aus solchen härtbaren Gemischen hergestellten Formkörper sind thermomechanisch wenig belastbar, denn für viele technische Anwendungen weisen sie eine zu geringe Wärmeformbeständigkeit auf.

Cycloaliphatische Epoxidharze der unten angegebenen Formeln I und II, wie beispielsweise 3,4-Epoxycyclohexylmethyl-3,4-epoxycyclohexancarboxylat, sind bekannt und zum Teil im Handel erhältlich, beispielsweise unter der Bezeichnung ERL 4221 oder Unox® 289. Polyglycidylether der unter angegebenen Formel III, wie beispielsweise der Tetraglycidylether von 2,2,6,6-Tetramethylolcyclohexanol oder -cyclohexanon, sind aus der EP-Anmeldung 135 477 bekannt. Die aus solchen cycloaliphatischen Epoxidharzen hergestellten Formstoffe sind aber spröde. Trotz einer sehr hohen Vernetzungdichte anhydridgehärteter Epoxidharze nehmen derart formulierte, mineralisch gefüllte Formstoffe in einem Kochwassertest relativ viel Wasser auf.

In der DE-OS 32 42 711 wird nun vorgeschlagen, die nachteiligen Eigenschaften von 3,4-Epoxycyclohexylmethyl-3,4-epoxycyclohexancarboxylat dadurch zu verbessern, indem man dieses Epoxidharz in Mischung mit Hexahydrophthalsäurediglycidylester einsetzt. Nach Härtung eines solchen Epoxidharzgemisches mit üblichen Polycarbonsäureanhydriden erhält man Formstoffe mit besseren mechanischen Eigenschaften, doch ist die Wasseraufnahme dieser Formstoffe relativ gross.

Es wurde nun gefunden, dass man bei der Aushärtung eines Gemisches aus hydriertem Bisphenol A- oder hydriertem Bisphenol F-diglycidylether und bestimmten cycloaliphatischen Epoxidharzen mit cycloaliphatischen Polycarbonsäureanhydriden Formstoffe oder Beschichtungen mit thermomechanisch hochwertigen Eigenschaften, mit überraschend geringer Wasseraufnahme und hoher Bewitterungsfestigkeit erhält.

Gegenstand vorliegender Erfindung ist somit ein härtbares Gemisch enthaltend
(a) 90 bis 50 Gew.-% eines hydrierten Bisphenol A-diglycidylethers, eines hydrierten Bisphenol F-diglycidylethers oder eines Gemisches davon,
(b) 50 bis 10 Gew.-% eines cycloaliphatischen Epoxidharzes der Formeln I II, III 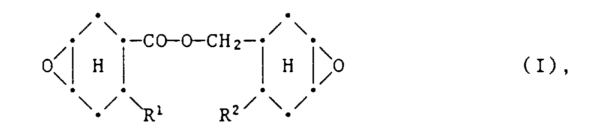 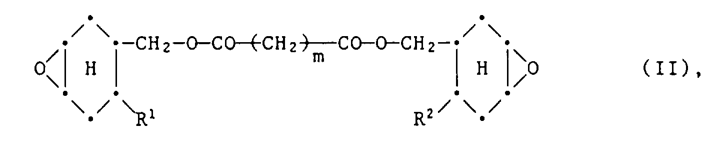 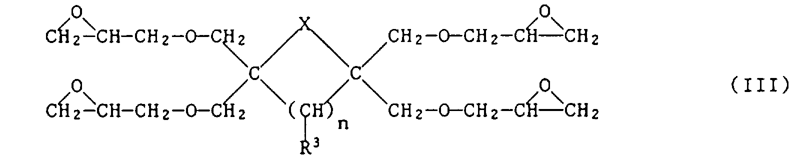 oder deren Gemische,
   worin R¹ und R unabhängig voneinander je für ein Wasserstoffatom oder Methyl stehen, m eine Zahl von 2 bis 6 bedeutet, X eine Gruppe 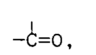 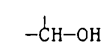 oder 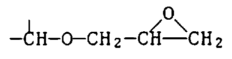 bedeutet, R³ für Wasserstoff oder Methyl, steht und n eine ganze Zahl von 2 bis 4 bedeutet, wobei der Rest R³ innerhalb des Moleküls verschiedene Bedeutungen haben kann und wobei die Mischung aus den Komponenten (a) und (b) 100 Gew.-% beträgt,
(c) ein cycloaliphatisches Polycarbonsäureanhydrid als Härter und gegebenenfalls
(d) einen Härtungsbeschleuniger.

Das erfindungsgemässe Gemisch enthält als Komponente (a) einen hydrierten Bisphenol A-diglycidylether oder einen hydrierten Bisphenol F-diglycidylether.

Als Komponente (b) enthält das erfindungsgemässe Gemisch ein cycloaliphatisches Epoxidharz der Formel I, II oder III, insbesondere ein cycloaliphatisches Epoxidharz der Formel I oder III.

Wie eingangs erwähnt, sind cycloaliphatische Epoxidharze der Formel I im Handel erhältlich und zum Teil auch solche der Formel II, deren Herstellung in den US-Patenten 2,750,395 und 2,863,881 näher beschrieben wird.
Von den cycloaliphatischen Epoxidharzen der Formel III verwendet man für das erfindungsgemässe Gemisch vorzugsweise solche, worin X die Gruppe 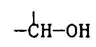 oder 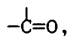 vorzugsweise 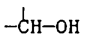 bedeutet, R ein Wasserstoffatom bedeutet und n für die Zahl 2 oder 3, insbesondere für die Zahl 3, steht. Die cycloaliphatischen Epoxidharze der Formel III können nach dem in der EP-A-0 135 477 offenbarten Verfahren hergestellt werden, indem man eine Verbindung der Formel IV 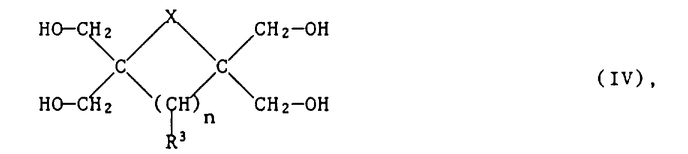 worin X, R³ und n die zuvor genannten Bedeutungen haben, mit einem Epihalohydrin in Gegenwart eines Katalysators zum entsprechenden Tetrahalohydrinäther umsetzt und in Gegenwart eines Alkalimetallhydroxids dehydrohalogeniert.

Geeignete Verbindungen der Formel IV sind beispielsweise 2,2,6,6-Tetramethylolcyclohexanol, 4-Methyl-2,2,6,6-tetramethylolcyclohexanol, 2,2,6,6-Tetramethylolcyclohexanon und 2,2,5,5-Tetramethylolcyclopentanon. Vorzugsweise enthält das erfindungsgemässe Gemisch 85 bis 60 Gew.-%, insbesondere 80 bis 70 Gew.-%, einer Verbindung der Komponente (a) und vorzugsweise 40 bis 15 Gew.-%, insbesondere 30 bis 20 Gew.-%, einer Verbindung der Komponente (b).
Als Komponente (c) können im erfindungsgemässen Gemisch beispielsweise folgende cycloaliphatische Polycarbonsäureanhydride enthalten sein, wie Tetrahydrophthalsäureanhydrid, Hexahydrophthalsäureanhydrid, Methyltetrahydrophthalsäureanhydrid, Hexachlorendomethylentetrahydrophthalsäureanhydrid, Endomethylentetrahydrophthalsäureanhydrid und Methylendomethylentetrahydrophthalsäureanhydrid.
Vorzugsweise enthält das erfindungsgemässe Gemisch als Komponente (c) ein cycloaliphatisches Dicarbonsäureanhydrid, insbesondere Hexahydrophthalsäure- oder Methylhexahydrophthalsäureanhydrid.

Im erfindungsgemässen härtbaren Gemisch liegen die Komponenten (a) und (b) zur Komponente (c) in den üblichen Mengenverhältnissen vor, d.h. das Mischungsverhältnis kann so gewählt werden, dass auf ein Aequivalent Epoxidgruppe 0,5 bis 1,2 Aequivalente Anhydridgruppe entfallen. Als Härtungsbeschleuniger (d), welche gegebenenfalls im erfindungsgemässen Gemisch enthalten sind, können an sich bekannte Verbindungen verwendet werden. Vorzugsweise enthalten die erfindungsgemässen Gemische einen Härtungsbeschleuniger. Als Beispiele von Härtungsbeschleunigern seien genannt: Komplexe von Aminen, besonders tertiären Aminen, wie Monoethylamin, Trimethylamin und Octyldimethylamin, mit Bortrifluorid oder Bortrichlorid, tertiäre Amine, wie Benzyldimethylamin, Tris(dimethylaminomethyl)phenol, Hexamethylentetramin oder 1,6-Bis(dimethylamino)hexan; Harnstoffderivate, wie N-4-Chlorphenyl-N′,N′-dimethylharnstoff (Monuron), N-3-Chlor-4-methylphenyl-N′,N′-dimethylharnstoff (Chlortoluron), N-(2-Hydroxyphenyl)-N′,N′-dimethylharnstoff und N-(2-Hydroxy-4-nitrophenyl)-N',N'-dimethylharnstoff, und gegebenenfalls substituierte Imidazole, wie Imidazol, Benzimidazol, 1-Methylimidazol, 2-Ethyl-4-methylimidazol, 2-Vinylimidazol, 2-Phenylimidazol, 2-Phenyl-4-methylimidazol, 1-(2,6-Dichlorbenzoyl)-2-phenylimidazol und 1-(2,4,6-Trimethylbenzoyl)-2-phenylimidazol.

Tertiäre Amine, besonders Benzyldimethylamin, und Imidazole, besonders 2-Phenylimidazol, 1-Methylimidazol und 2-Ethyl-4-methylimidazol, sind als Härtungsbeschleuniger (d) bevorzugt.

Härtungsbeschleuniger werden im allgemeinen in Mengen von etwa 0,1 bis etwa 5,0 Gew.-%, vorzugsweise von 0,5 bis 5 Gew.-%, bezogen auf die Epoxidharzkomponente (a) und (b) und auf das Härtungsmittel (c), eingesetzt.
Die erfindungsgemässen Gemische können vor der Härtung in irgend einer Phase mit üblichen Modifizierungsmitteln, wie Weichmachern, Streck-, Füll- und Verstärkungsmitteln versehen werden. Beispiele für solche üblichen Zusätze sind Steinkohlenteer, Bitumen, Textilfasern, Glasfasern, Asbestfasern, Borfasern, Kohlenstoff-Fasern, mineralische Silikate, wie Wollastonit, Glimmer, Quarzmehl, Aluminiumoxid, Aluminiumoxidhydrat, Betonite, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die erfindungsgemässen Gemische finden aufgrund der vorteilhaften Eigenschaften der daraus hergestellten Formstoffe und Beschichtungen im Oberflächenschutz Verwendung, besonders jedoch zur Herstellung von gehärteten Produkten für elektrische und elektronische Anwendungen. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze und Laminierharze verwendet werden.

Die Herstellung der erfindungsgemässen Gemische kann in üblicher Weise mit Hilfe bekannter Mischaggregate, beispielsweise mittels Rührer, Kneter, Walzen oder Mühlen, erfolgen. Die Füllstoffe oder üblichen Zusätze können dabei einer Einzelkomponente oder dem härtbaren Gemisch zugefügt werden.

Die Härtung der erfindungsgemässen Gemische kann auf an sich bekannte Weise ein- oder zweistufig vorgenommen werden. Die Härtung der erfindungsgemässen Gemische erfolgt im allgemeinen durch Erhitzen auf Temperaturen zwischen 80 und 200°C, besonders zwischen 100 und 180°C.

Die aus den erfindungsgemässen Gemischen durch Härtung hergestellten Formstoffe, Beschichtungen oder Isolationen zeichnen sich vor allem durch erhöhte Hydrolyse- und Bewitterungsbeständigkeit sowie durch ausgezeichnete thermomechanische Eigenschaften aus.

Beispiel 1: 74 g Hexahydrophthalsäureanhydrid sowie 1 g Benzyldimethylamin werden bei 60°C homogenisiert und zu einer Harzmischung bestehend aus 70 g hydriertem Bisphenol A-diglycidylether mit einem Epoxidgehalt von 4,51 Aequivalenten/kg und 30 g 3,4-Epoxycyclohexylmethyl-3',4'-epoxycyclohexancarboxylat mit einem Epoxidgehalt von 7,16 Aequivalenten/kg eingewogen. Zu der auf 70°C erwärmten Mischung werden innerhalb von 5 Minuten 263 g silaniertes Quarzmehl (W 12 EST^{®} der Quarzwerke Frechen) eingerührt unter gleichzeitigem Anheben der Temperatur auf 80°C. Die Giessharzmischung wird anschliessend in Formen vergossen, nachdem die Mischung 5 bis 10 Minuten unter Rühren bei vermindertem Druck (1-2 bar) entgast wurde. Die Härtung der Mischung erfolgt während 2 Stunden bei 100°C und 16 Stunden bei 160°C.

Folgende Eigenschaften werden an den Formkörpern gemessen:

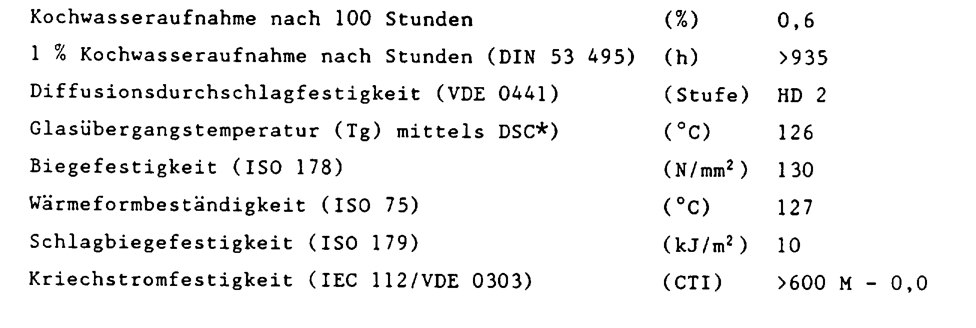

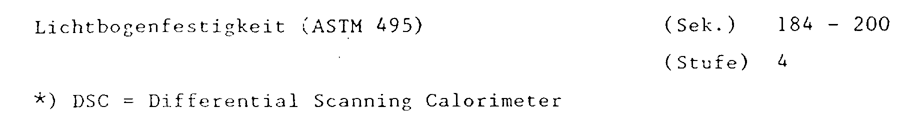

Beispiele 2 bis 4: Gemäss der in Beispiel 1 angegebenen Arbeitsweise werden folgende Bestandteile homogenisiert, entgast und während 2 Stunden bei 100°C und 16 Stunden bei 140°C zu Formkörpern ausgehärtet. Die Eigenschaften der Formkörper sind in der folgenden Tabelle angegeben.

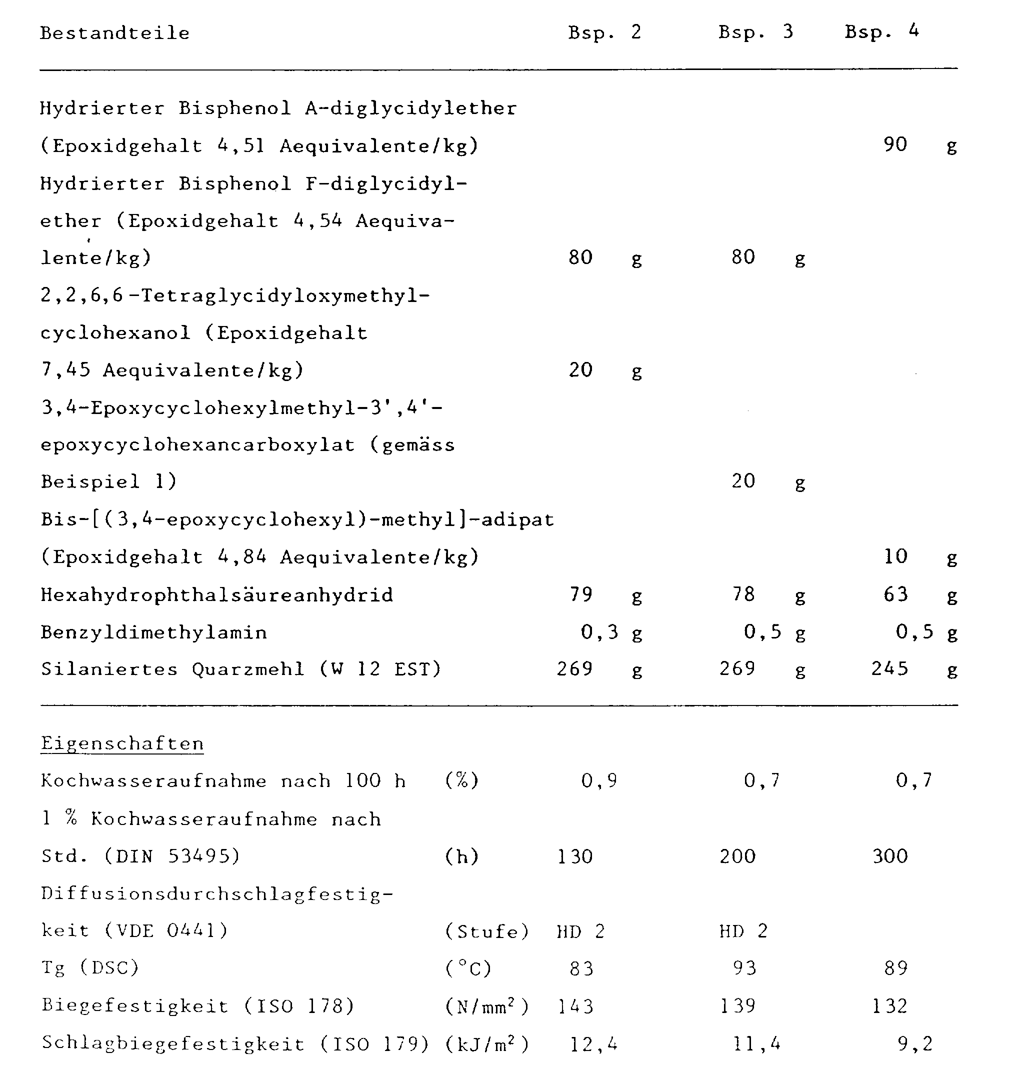

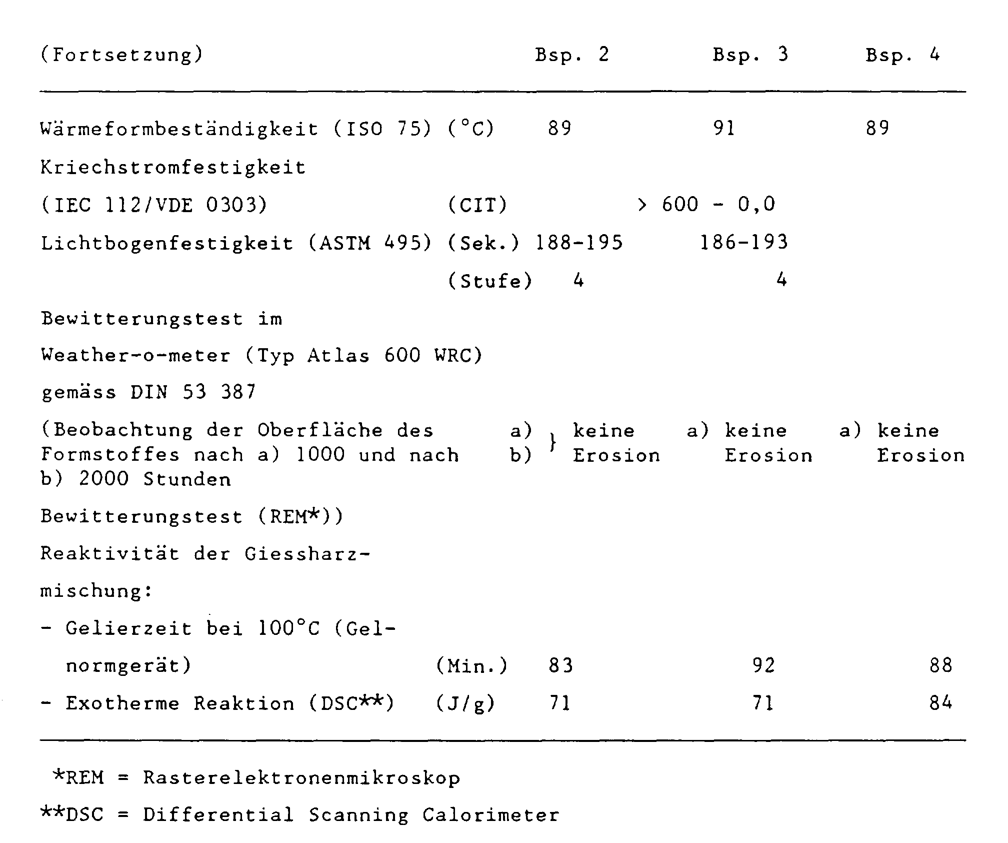

## Patentansprüche

1. Härtbares Gemisch enthaltend
(a) 90 bis 50 Gew.-% eines hydrierten Bisphenol A-diglycidylethers, eines hydrierten Bisphenol F-diglycidylethers oder eines Gemisches davon,
(b) 50 bis 10 Gew.-% eines cycloaliphatischen Epoxidharzes der Formeln I II, III 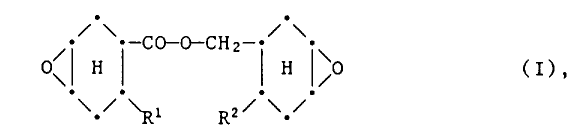 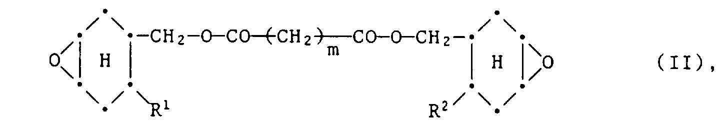 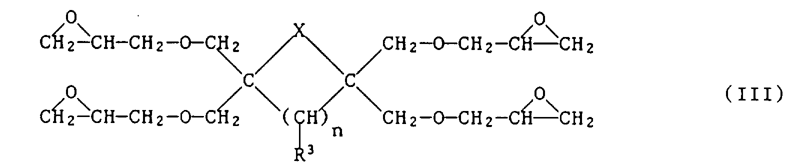 oder deren Gemische,
worin R¹ und R unabhängig voneinander je für ein Wasserstoffatom oder Methyl stehen, m eine Zahl von 2 bis 6 bedeutet, X eine Gruppe 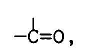 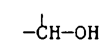 oder 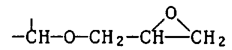 bedeutet, R³ für Wasserstoff oder Methyl, steht und n eine ganze Zahl von 2 bis 4 bedeutet, wobei der Rest R³ innerhalb des Moleküls verschiedene Bedeutungen haben kann und wobei die Mischung aus den Komponenten (a) und (b) 100 Gew.-% beträgt,
(c) ein cycloaliphatisches Polycarbonsäureanhydrid als Härter und gegebenenfalls
(d) einen Härtungsbeschleuniger.

2. Gemisch gemäss Anspruch 1 enthaltend als Komponente (a) einen hydrierten Bisphenol A-diglycidylether oder einen hydrierten Bisphenol F-diglycidylether.

3. Gemisch gemäss Anspruch 1, enthaltend als Komponente (b) ein cycloaliphatisches Epoxidharz der Formel I oder III.

4. Gemisch gemäss Anspruch 1 enthaltend 85 bis 60 Gew.-% einer Verbindung der Komponente (a) und 40 bis 15 Gew.-% einer Verbindung der Komponente (b).

5. Gemisch gemäss Anspruch 1 enthaltend 80 bis 70 Gew.-% einer Verbindung der Komponente (a) und 30 bis 20 Gew.-% einer Verbindung der Komponente (b).

6. Gemisch gemäss Anspruch 1 enthaltend als Komponente (c) ein cycloaliphatisches Dicarbonsäureanhydrid.

7. Gemisch gemäss Anspruch 6 enthaltend als cycloaliphatisches Dicarbonsäureanhydrid Hexahydrophthalsäure- oder Methylhexahydrophthalsäureanhydrid.

8. Gemisch gemäss Anspruch 1 enthaltend einen Härtungsbeschleuniger (d).

9. Die aus den härtbaren Gemischen gemäss Anspruch 1 durch Härtung erhaltenen Formstoffe oder Beschichtungen.

## Claims

1. A curable mixture comprising
(a) 90 to 50% by weight of a hydrogenated bisphenol A diglycidyl ether, a hydrogenated bisphenol F diglycidyl ether, or a mixture thereof
(b) 50 to 10% by weight of a cycloaliphatic epoxy resin of formula I, II or III 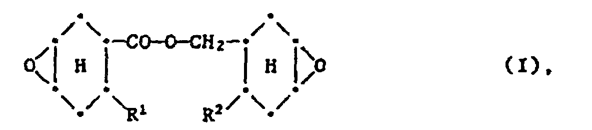 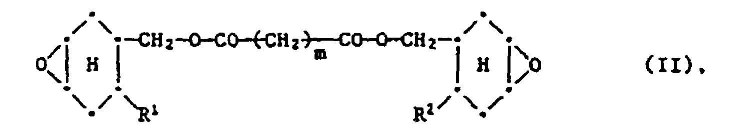 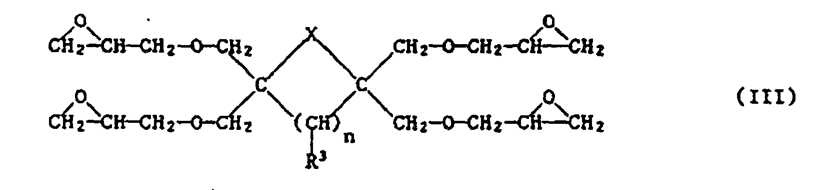 or a mixture thereof,
wherein R₁ and R₂ are each independently of the other a hydrogen atom or methyl, m is a number from 2 to 6, X is a group 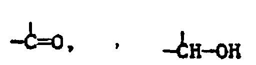 or 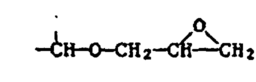 R₃ is hydrogen or methyl and n is an integer from 2 to 4, which radical R₃ may have different meanings within the molecule and said mixture of components (a) and (b) being 100% by weight,
(c) a cycloaliphatic polycarboxylic anhydride as hardener and, optionally,
(d) a curing accelerator.

2. A mixture according to claim 1 comprising as component (a) a hydrogenated bisphenol A diglycidyl ether or a hydrogenated bisphenol F diglycidyl ether.

3. A mixture according to claim 1 comprising as compound (b) a cycloaliphatic epoxy resin of formula I or III.

4. A mixture according to claim 1 containing 85 to 60% by weight of a compound of component (a) and 40 to 15% by weight of a compound of component (b).

5. A mixture according to claim 1 containing 80 to 70% by weight of a compound of component (a) and 30 to 20% by weight of a compound of component (b).

6. A mixture according to claim 1 comprising as component (c) a cycloaliphatic dicarboxylic anhydride.

7. A mixture according to claim 6 comprising hexahydrophthalic anhydride or methylhexahydrophthalic anhydride as cycloaliphatic dicarboxylic anhydride.

8. A mixture according to claim 1 comprising a curing accelerator (d).

9. Mouldings or coatings obtained from a curable mixture according to claim 1 by curing.

## Revendications

1. Mélange durcissable contenant
(a) de 90 à 50 % en poids d'un éther diglycidylique du bisphénol A hydrogéné, d'un éther diglycidylique du bisphénol F hydrogéné ou d'un de leurs mélanges,
(b) de 50 à 10 % en poids d'une résine époxyde cycloaliphatique ayant les formules I, II, III 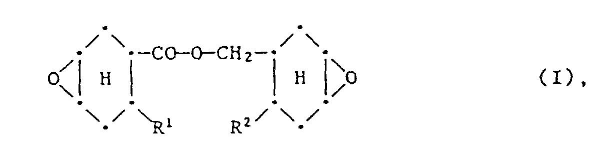 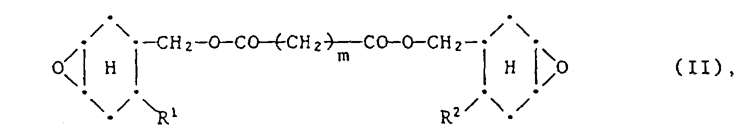 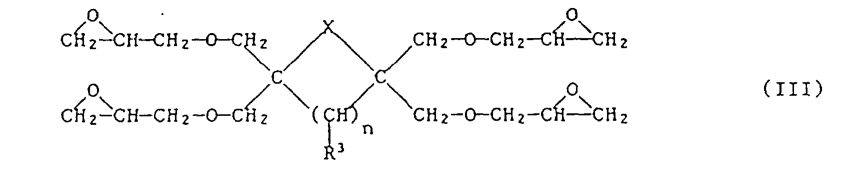 ou leurs mélanges,
où R¹ et R, indépendamment l'un de l'autre, sont chacun un atome d'hydrogène ou un radical méthyle, m est un nombre de 2 à 6, x est un groupe 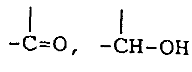 ou 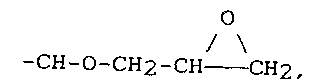 R³ est un hydrogène ou le radical méthyle, et n est un nombre entier de 2 à 4, le radical R³ pouvant, à l'intérieur de la molécule, avoir différentes significations, la somme des constituants (a) et (b) correspondant à 100 % en poids,
(c) un anhydride polycarboxylique cycloaliphatique servant de durcisseur, et éventuellement
(d) un accélérateur de durcissement.

2. Mélange selon la revendication 1, contenant comme constituant (a) un éther diglycidylique du bisphénol A hydrogéné ou un éther diglycidylique du bisphénol F hydrogéné.

3. Mélange selon la revendication 1, contenant comme constituant (b) une résine époxyde cycloaliphatique de formule I ou III.

4. Mélange selon la revendication 1, contenant de 85 à 60 % en poids d'un composé du constituant (a) et de 40 à 15 % en poids d'un composé du constituant (b).

5. Mélange selon la revendication 1, contenant de 80 à 70 % en poids d'un composé du constituant (a) et de 30 à 20 % en poids d'un composé du constituant (b).

6. Mélange selon la revendication 1, contenant comme constituant (c) un anhydride dicarboxylique cycloaliphatique.

7. Mélange selon la revendication 6, contenant comme anhydride dicarboxylique cycloaliphatique l'anhydride hexahydrophtalique ou l'anhydride méthylhexahydrophtalique.

8. Mélange selon la revendication 1, contenant un accélérateur de durcissement (d).

9. Objets moulés ou revêtements obtenus par durcissement à partir des mélanges durcissables selon la revendication 1.
